# FASCICULE DE BREVET EUROPEEN

(11) **EP 3 999 418 B1**
(45) Date de publication et mention de la délivrance du brevet: **17.09.2025**
(21) Numéro de dépôt: 20751612.1
(22) Date de dépôt: 13.07.2020
(51) Int. Cl.: B64C 11/06, B64C 11/44, B64C 11/38, F01D 7/00, F04D 29/32

(54) **MODULE DE TURBOMACHINE POUR UNE HELICE A CALAGE VARIABLE DES PALES ET TURBOMACHINE LE COMPORTANT**
TURBOMASCHINENMODUL FÜR EINEN PROPELLER MIT SCHAUFELN MIT VARIABLEM ANSTELLWINKEL UND TURBOMASCHINE DAMIT
TURBOMACHINE MODULE FOR A PROPELLER HAVING VARIABLE-PITCH BLADES AND TURBOMACHINE COMPRISING SAME

(30) Priorité: 15.07.2019 FR 1907946
(43) Date de publication de la demande: 25.05.2022
(73) Titulaire: SAFRAN AIRCRAFT ENGINES, 75015 Paris (FR)
(72) Inventeur: COTTET, Clément, 77550 MOISSY-CRAMAYEL (FR); PAPIN, Thierry, Georges, Paul, 77550 MOISSY-CRAMAYEL (FR); SERVANT, Régis, Eugène, Henri, 77550 Moissy-Cramayel Cedex (FR)
(74) Mandataire: Gevers & Orès
(86) Numéro de dépôt international: PCT/FR2020/051264
(87) Numéro de publication internationale: WO 2021/009460

(56) Documents cités:
- EP-A1- 3 165 452
- FR-A1- 2 937 678
- FR-A1- 3 046 406
- US-B2- 10 288 087
- US-B2- 8 371 105

## Description

### Domaine technique de l'invention

L'invention concerne les hélices à pas variable de turbomachines, que le rotor soit caréné ou non. Elle vise plus particulièrement les mécanismes de contrôle du pas des pales de ces hélices.

### Arrière-plan technique

L'arrière-plan technique comprend notamment les documents US10288087B2 et US837110562.

Il est connu d'augmenter le taux de dilution des moteurs à double flux, qu'ils soient de type turbopropulseur ou à hélice non carénée, pour améliorer leur rendement propulsif et diminuer leur consommation spécifique. Cette caractéristique permet d'augmenter le taux de dilution des moteurs, mais elle présente aussi l'inconvénient de travailler avec des vitesses réduites de la soufflante ou de l'hélice, de diminuer son taux de compression et ainsi générer des instabilités aérodynamiques, par exemple réduire les marges au pompage.

Une des solutions pour contrer ces instabilités est d'utiliser une hélice à pas variable. Le mécanisme de changement de pas devient donc une brique technologique majeure pour ces moteurs. Les hélices constituées par un aubage de soufflante sur les turboréacteurs ou les hélices sur les turbomachines de type openrotor (à hélice non carénée) comportent un grand nombre de pales. De plus, le système de changement de pas doit contrer des efforts importants du fait de la taille des pales et de la puissance transmise. Également, le système doit permettre une grande amplitude de variation de l'angle de calage, entre des positions extrêmes de fonctionnement.

Outre des systèmes utilisant des actionneurs individuels par pales, qui posent des problèmes d'intégration, d'alimentation en énergie des actionneurs et de complexité pour le réglage, on connait différents systèmes utilisant une couronne de synchronisation pour modifier d'un bloc le calage d'une rangée annulaire d'aubes ou de pales. Par exemple, le document FR-A1-2 937 678 décrit un système utilisant un anneau rotatif entrainé par des vérins dans un plan transversal à l'axe longitudinal et le document FR-A1-2 997 724 décrit un système utilisant un anneau entraîné en translation axiale par un vérin longitudinal.

Les systèmes connus posent à divers niveaux des problèmes d'encombrement, de complexité et de réglage ou d'acheminement de l'énergie aux différents actionneurs, surtout dans le cadre des actionneurs hydrauliques.

L'invention a pour but de répondre à la fois aux problèmes d'intégration dans l'espace du moyeu de l'hélice, d'acheminement d'énergie à un ou plusieurs actionneurs, ainsi que de permettre un réglage précis du pas des pales et un rattrapage des éventuels jeux de fabrication.

Un deuxième objectif est de minimiser l'impact de l'installation d'un mécanisme de changement de pas, sur la modularité du moteur et sa maintenance.

La solution a en plus pour objectif d'améliorer la fiabilité du système, en particulier par rapport à une panne d'actionneur.

### Résumé de l'invention

A cet effet, l'invention concerne un module de turbomachine d'axe longitudinal, le module comportant :
- un carter rotatif autour de l'axe longitudinal et portant une hélice munie d'une pluralité de pales,
- un système de changement de pas des pales de l'hélice comprenant :
   ° un moyen de commande, et
   ° un mécanisme de variation du calage des pales de l'hélice.

L'invention est remarquable en ce que ledit système est porté par le carter rotatif, en ce que lesdits moyens de commande comprennent une rangée annulaire d'actionneurs rotatifs répartis autour dudit axe longitudinal, et en ce que ledit mécanisme de variation du calage des pales comprend une couronne de synchronisation qui est entraînée en rotation par des arbres rotatifs de sortie des actionneurs, la couronne de synchronisation étant guidée en rotation par rapport audit carter rotatif par des moyens de guidage et engrenée par une première denture de la couronne de synchronisation avec des pignons des pales.

L'utilisation d'une couronne de synchronisation permet de modifier le pas de l'ensemble des pales de manière synchronisée. Le fait que la couronne de synchronisation soit guidée en rotation sur le carter rotatif permet à l'ensemble comprenant le carter rotatif et le mécanisme de mise en rotation des pales de former un ensemble fonctionnel au plus proche des pales avec un encombrement réduit. Cela facilite son intégration sur la turbomachine.

De plus, le guidage en rotation de la couronne sur le carter rotatif participe à la rigidité du mécanisme pour un calage précis des pales. En ajoutant à cela le fait que la couronne de synchronisation entraîne les pales par un engrenage sur les pivots, le dispositif assure, grâce à la précision des engrènements, une très bonne erreur relative dans le calage des pales.

Par ailleurs, ces caractéristiques permettent d'installer une interface, au plus proche des pales, pour verrouiller toute la cinématique et bloquer la position de ces dernières en cas d'urgence.

En ce qui concerne le dimensionnement des actionneurs, il est possible de minimiser le couple qu'ils doivent fournir en jouant sur les paramètres géométriques de la couronne et de ses dentures.

Enfin, le fait d'utiliser une rangée annulaire de plusieurs actionneurs qui engrènent sur la même roue de synchronisation permet, en cas de panne d'un actionneur, de continuer à fonctionner avec les autres actionneurs. Cela améliore la fiabilité en cas de panne. D'autre part, dans le cadre de la stratégie d'actionnement, cet agencement peut permettre d'effectuer un roulement entre les actionneurs qui fournissent la puissance afin de laisser les autres refroidir. Ce point est important avec des actionneurs électriques.

De préférence, la couronne de synchronisation est entourée par un moyeu appartenant au carter rotatif et portant les pales.

Cette disposition correspond à un agencement compact du module, donc plus facile à intégrer et plus rigide pour assurer la précision du calage des pales.

Avantageusement, la couronne de synchronisation comporte un bord périphérique radialement externe coopérant avec au moins un palier porté par ledit carter rotatif pour former lesdits moyens de guidage en rotation.

En reportant les moyens de guidage sur la périphérie de la couronne de synchronisation, cela permet de répartir les efforts transverses et les couples exercés pour le maintien de cette dernière sur une surface relativement importante. Cela participe à la robustesse et à la rigidité du dispositif.

Avantageusement, les arbres de sortie des actionneurs ont des axes de rotation sensiblement parallèles audit axe longitudinal.

Avantageusement, les actionneurs sont portés par une paroi dudit carter rotatif, cette paroi étant sensiblement perpendiculaire audit axe longitudinal.

De préférence, la première denture d'engrènement avec lesdits pignons des pales est tronconique.

Avantageusement, les pignons des pales sont des pignons coniques qui sont directement fixés à des pieds des pales.

De préférence, la couronne de synchronisation comprend une deuxième denture qui est cylindrique et engrène avec lesdits arbres rotatifs de sortie.

Préférentiellement, ladite deuxième denture est située sur un bord périphérique radialement interne de la couronne de synchronisation.

L'invention concerne également une turbomachine d'aéronef, comportant au moins un module tel que décrit précédemment.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 montre schématiquement une demi-coupe axiale d'un module selon l'invention ;
[Fig. 2] la figure 2 montre schématiquement, en coupe circonférentielle, différentes positions de calage des pales d'une hélice utilisant l'invention ;
[Fig. 3] la figure 3 montre une demi-coupe longitudinale schématique d'une turbomachine de type open-rotor utilisant le dispositif de la figure 1; et
[Fig. 4] la figure 4 montre une demi-coupe longitudinale schématique d'une turbomachine à soufflante carénée utilisant le dispositif de la figure 1.

### Description détaillée de l'invention

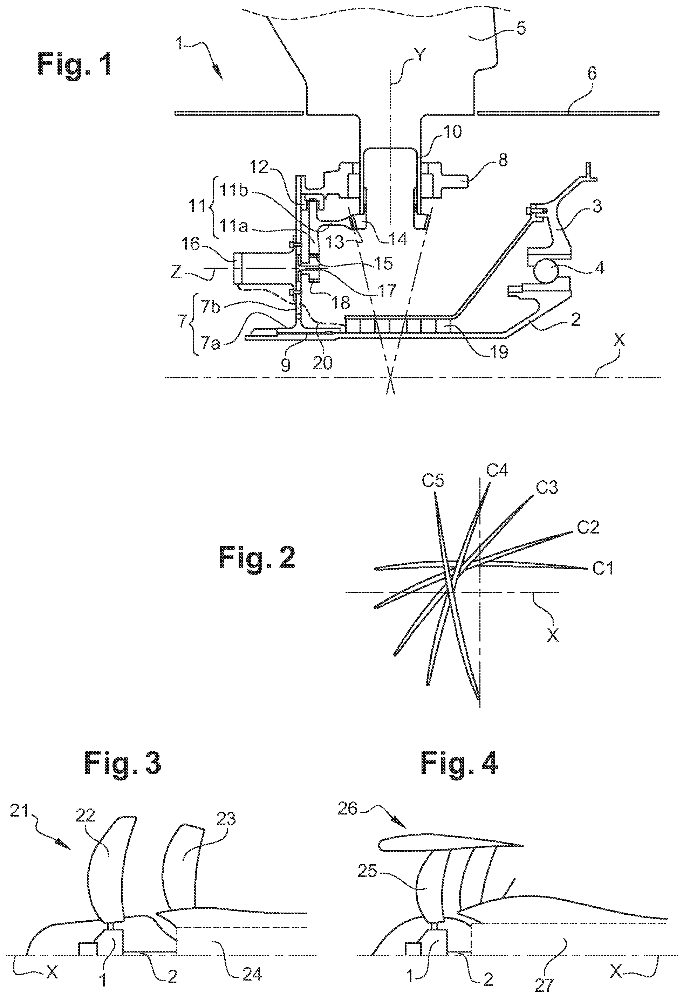

La figure 1 présente une vue générale d'une réalisation d'un dispositif 1 selon l'invention, entraîné en rotation autour de l'axe longitudinal X d'une turbomachine par un arbre 2 sortant de la partie moteur, non représentée. L'arbre 2 est lui-même guidé en rotation sur un carter fixe 3 de la turbomachine par des paliers 4. L'hélice est placée ici en avant du moteur. Les pales 5 de l'hélice sont entraînées en rotation autour de l'axe longitudinal X, et sont conçues pour avoir un calage variable chacune autour d'un axe radial Y tournant avec l'hélice. Un capot 6 isole le dispositif proprement dit du flux d'air dans lequel travaillent les pales 5 de l'hélice.

Le dispositif 1 comprend ici un tourillon 7, centré sur l'axe longitudinal X, qui relie l'arbre 2 au moyeu 8 de l'hélice, supportant les pales 5. Le tourillon 7 comporte une partie centrale 7a sensiblement cylindrique qui est emboitée sur l'arbre 2. La liaison 9 est ici réalisée par des cannelures, ce qui permet un montage/démontage du tourillon 7 par l'avant de l'arbre 2. Il est maintenu en position axiale par un écrou. Sensiblement au droit de la liaison par cannelures 9, le tourillon 7 comprend un disque 7b relié au moyeu 8. Le disque 7b est ici positionné en avant du moyeu 8. Une liaison boulonnée permet le centrage et la fixation du moyeu 8 en périphérie du disque 7b. Le moyeu 8 est une pièce de structure comportant en périphérie une rangée annulaire de logements circulaires avec des moyens connus et non détaillés, tels que des roulements, pour installer des pivots 10 tournant avec les pales 5 autour des axes radiaux Y. Le tourillon 7 et le moyeu 8 forment un carter rotatif reliant les pales 5 de l'hélice à l'arbre 2 du moteur.

Pour réaliser le mécanisme de changement de pas, une couronne de synchronisation 11 est montée sur le tourillon 7. La couronne de synchronisation 11 est ici formée d'un disque 11a portant une patte cylindrique 11b sur sa face arrière.

La couronne de synchronisation 11 est montée entre le disque 7b du tourillon et les pivots 10 des pales 5, sous le moyeu 8. La périphérie du disque 11a de la couronne de synchronisation 11 est maintenue dans un palier 12 fixé en périphérie du disque 7a du tourillon 7, sous le moyeu 8. Ce palier 12 comprend des moyens, non détaillés ici, notamment une gorge et des roulements, qui maintiennent la couronne de synchronisation 11 centrée sur l'axe X et dans une position axiale déterminée. La périphérie extérieure du disque 11a de la couronne de synchronisation 11 forme une piste pour les roulements dudit palier 10. Ces moyens permettent donc à la couronne de synchronisation 11 de tourner librement autour de l'axe longitudinal X par rapport au tourillon 7, tout en reprenant les efforts auxquelles elle est soumise pour la maintenir en position axiale.

La patte cylindrique 11b de la couronne de synchronisation 11 porte à son extrémité libre une couronne dentée 13. Ici, la surface portant les dents de la couronne dentée 13 est tronconique autour de l'axe X, elle suit un cône dont les lignes génératrices passent par l'intersection entre l'axe X et le plan des axes Y des pivots 10 des pales 5. La couronne dentée 13 engrène avec la denture de pignons coniques 14 fixés à l'extrémité du pivot 10 de chaque pale 5. La surface portant les dents du pignon 14 de chaque pivot 10 suit un cône centré sur l'axe Y du pivot et dont les lignes génératrices passent par l'intersection entre l'axe X et le plan des axes Y des pivots des pales.

La précision des engrènements de la couronne de synchronisation 11 avec les pignons coniques 14 permet d'obtenir une bonne précision du calage pale à pale, avec une très faible erreur relative.

Par ailleurs, le disque 11a de la couronne de synchronisation 11 présente un évidement central. Le disque porte, à la périphérie de cet évidement central une couronne dentée intérieure et axiale 15.

Le dispositif comporte également une rangée annulaire d'actionneurs rotatifs 16 ayant des axes Z parallèles à l'axe X de la turbomachine, dont un est représenté sur la figure 1. Les actionneurs rotatifs 16 sont fixés sur le disque 7b du tourillon 7, en avant de celui-ci. Chacun entraine en rotation autour de son axe Z un arbre de sortie 17 qui traverse le disque 7b du tourillon et porte une roue dentée 18 qui engrène avec la couronne dentée intérieure 15 du disque 11b de la couronne de synchronisation 11. Par exemple huit actionneurs 16 identiques à celui représenté sont fixés sur le disque du tourillon, répartis circonférentiellement en couronne à l'avant de celui-ci. Le nombre d'actionneurs et leur taille peuvent varier en fonction des paramètres géométriques du dispositif et de la puissance individuelle définie pour chaque actionneur. Le nombre d'actionneurs peut être typiquement trois, six ou douze.

Ici, il s'agit d'actionneurs électriques. Des moyens de transferts de puissance tournants 19 sont installés à l'arrière du tourillon 7, entre l'arbre 2 et le carter fixe 3 de la turbomachine. Des fils 20 transmettent l'énergie de ces moyens 19 vers les actionneurs 16. Ils sont commandés en position autour de leur axe de rotation Z par des impulsions électriques.

En variante, il est possible d'utiliser des actionneurs hydrauliques. Dans ce cas, un dispositif de transfert hydraulique tournant doit être installé entre la structure fixe et le dispositif pour leur fournir l'énergie et les commander.

L'ensemble forme un module de support des pales 5 de l'hélice avec commande de l'angle de calage dont l'encombrement est réduit à un volume restreint au niveau du moyeu 8 des pales 5 de l'hélice.

Le tourillon 7, le moyeu 8 de l'hélice forment un carter rotatif à la vitesse imprimée par l'arbre 2 de l'hélice. Les actionneurs 16 sont commandés pour faire tourner leur arbre de sortie 17 à la même vitesse et d'une même valeur dans un sens déterminé en fonction de l'angle de calage voulu. La rotation des arbres de sortie 17 entraîne une rotation de la couronne de synchronisation 11 dans le référentiel du carter rotatif et, par l'engrenage de la roue de synchronisation 11 sur les pignons 14 des pivots 10 des pales 5, une modification correspondante du calage de chaque pale 5 autour de l'axe Y de son pivot 10.

En surdimensionnant les actionneurs, cet agencement permet, en cas de panne d'un actionneur, de continuer à fonctionner avec les autres actionneurs. D'autre part, dans le cadre de la stratégie d'actionnement, cet agencement peut permettre d'effectuer un roulement entre les actionneurs qui fournissent la puissance afin de laisser les autres refroidir. Ce point est important avec des actionneurs électriques.

La cinématique de l'ensemble permet de modifier l'angle de calage sur une plage angulaire importante. La figure 2 illustre différentes positions angulaires des pales 5, pour des modes de fonctionnement en drapeau C1, en montée C2, au décollage C3, au sol C4 et en inversion de poussée C5. La variation d'angle de calage est supérieure à 90° entre les positions extrêmes.

Par ailleurs, la rigidité de l'ensemble, notamment grâce au palier 12 de guidage en rotation de la couronne de synchronisation 11 sur le tourillon 7 et aux liaisons par engrenage sur les dentures 13 et 15, permet si nécessaire de verrouiller toute la cinématique et de bloquer la position en calage des pales 5 en cas d'urgence. Les moyens complémentaires à installer sur le tourillon 7 pour effectuer cette fonction de verrouillage en cas de panne l'actionneur ne sont pas décrits ici.

Le dispositif qui a été décrit peut être installé par exemple sur une turbomachine 21 de type « open-rotor ». La figure 3 montre ainsi le dispositif 1 placé sous l'hélice amont 22 d'une telle turbomachine 21, avec en arrière une couronne de pales fixes 23 redressant le flux traversant l'hélice 22 et le moteur 24 proprement dit, non détaillé, qui entraine l'hélice 22 par l'arbre 2. De même, en référence à la figure 4, le dispositif 1 peut être installé pour entrainer la soufflante carénée 25 d'une turbomachine double flux 26, dont le moteur 27 n'est pas détaillé.

## Revendications

1. Module (1) pour turbomachine, le module comportant :
- une hélice comprenant une pluralité de pales,
- un carter rotatif (7-8) autour d'un axe longitudinal (X) et portant l'hélice munie de la pluralité de pales (5),
- un système de changement de pas des pales (5) de l'hélice comprenant :
° un moyen de commande, et
° un mécanisme de variation du calage des pales de l'hélice,
où ledit système est porté par le carter rotatif (7-8), où lesdits moyens de commande comprennent une rangée annulaire d'actionneurs rotatifs (16) répartis autour dudit axe longitudinal (X), et où ledit mécanisme de variation du calage des pales comprend une couronne de synchronisation (11) qui est entraînée en rotation par des arbres rotatifs de sortie (17) des actionneurs (16), la couronne de synchronisation (11) étant guidée en rotation par rapport audit carter rotatif (7-8) par des moyens de guidage et engrenée par une première denture (13) de la couronne de synchronisation avec des pignons (14) des pales (5), **caractérisé en ce que** les arbres de sortie (17) des actionneurs (16) ont des axes de rotation (Z) sensiblement parallèles audit axe longitudinal (X).

2. Module (1) selon la revendication 1, dans lequel la couronne de synchronisation (11) est entourée par un moyeu (8) appartenant au carter rotatif et portant les pales (5).

3. Module (1) selon l'une des revendications précédentes, dans lequel la couronne de synchronisation (11) comporte un bord périphérique radialement externe coopérant avec au moins un palier (12) porté par ledit carter rotatif (7-8) pour former lesdits moyens de guidage en rotation.

4. Module (1) selon l'une des revendications précédentes, dans lequel les actionneurs (16) sont portés par une paroi (7b) dudit carter rotatif, cette paroi (7b) étant sensiblement perpendiculaire audit axe longitudinal (X).

5. Module (1) selon l'une des revendications précédentes, dans lequel la première denture (13) d'engrènement avec lesdits pignons (14) des pales (5) est tronconique.

6. Module (1) selon l'une des revendications précédentes, dans lequel les pignons (14) des pales (5) sont des pignons coniques qui sont directement fixés à des pieds des pales (5).

7. Module (1) selon l'une des revendications précédentes, dans lequel la couronne de synchronisation (11) comprend une deuxième denture (15) qui est cylindrique et engrène avec lesdits arbres rotatifs de sortie (17).

8. Module (1) selon la revendication 7, dans lequel ladite deuxième denture (15) est située sur un bord périphérique radialement interne de la couronne de synchronisation (11).

9. Turbomachine (21,26) d'aéronef, comportant au moins un module (1) selon l'une des revendications précédentes.

## Patentansprüche

1. Modul (1) für ein Turbotriebwerk, wobei das Modul Folgendes umfasst:
- eine Schraube, die eine Vielzahl von Blättern umfasst,
- ein um eine Längsachse (X) herum drehbares und die mit der Vielzahl von Blättern (5) ausgestattete Schraube tragendes Gehäuse (7-8),
- ein System zur Änderung von Anstellwinkeln der Blätter (5) der Schraube, Folgendes umfassend:
- ein Steuerungsmittel und
- einen Variationsmechanismus der Feststellposition der Blätter der Schraube,
wobei das System von dem drehbaren Gehäuse (7-8) getragen wird, wobei die Steuerungsmittel eine ringförmige Reihe drehbarer Betätigungsvorrichtungen (16) umfassen, die um die Längsachse (X) herum verteilt sind, und wobei der Variationsmechanismus der Feststellposition der Blätter eine Synchronisationskrone (11) umfasst, die durch die Abtriebsdrehwellen (17) der Betätigungsvorrichtungen (16) drehangetrieben wird, wobei die Synchronisationskrone (11) in Bezug auf das drehbare Gehäuse (7-8) durch Führungsmittel rotationsgeführt wird und durch eine erste Verzahnung (13) der Synchronisationskrone mit Zahnrädern (14) der Blätter (5) in Eingriff vorliegt, **dadurch gekennzeichnet, dass** die Abtriebswellen (17) der Betätigungsvorrichtungen (16) Drehachsen (Z) aufweisen, die im Wesentlich parallel zu der Längsachse (X) sind.

2. Modul (1) nach Anspruch 1, wobei die Synchronisationskrone (11) von einer Nabe (8) umgeben ist, die zu dem drehbaren Gehäuse gehört und die Blätter (5) trägt.

3. Modul (1) nach einem der vorstehenden Ansprüche, wobei die Synchronisationskrone (11) einen radial externen peripheren Rand umfasst, der mit mindestens einem Lager (12) kooperiert, das von dem drehbaren Gehäuse (7-8) getragen wird, um die Drehführungsmittel zu bilden.

4. Modul (1) nach einem der vorstehenden Ansprüche, wobei die Betätigungsvorrichtungen (16) von einer Wand (7b) des drehbaren Gehäuses getragen werden, wobei diese Wand (7b) im Wesentlichen senkrecht zu der Längsachse (X) vorliegt.

5. Modul (1) nach einem der vorstehenden Ansprüche, wobei die erste Verzahnung (13) zum Eingriff mit den Zahnrädern (14) der Blättern (5) kegelförmig ist.

6. Modul (1) nach einem der vorstehenden Ansprüche, wobei die Zahnräder (14) der Blätter (5) Kegelzahnräder sind, die direkt an den Füßen der Blätter (5) befestigt sind.

7. Modul (1) nach einem der vorstehenden Ansprüche, wobei die Synchronisationskrone (11) eine zweite Verzahnung (15) umfasst, die zylindrisch ist und mit den Abtriebsdrehwellen (17) in Eingriff vorliegt.

8. Modul (1) nach Anspruch 7, wobei die zweite Verzahnung (15) sich auf dem internen radial peripheren Rand der Synchronisationskrone (11) befindet.

9. Turbotriebwerk (21, 26) eines Luftfahrzeugs, das mindestens ein Modul (1) nach einem der vorstehenden Ansprüche umfasst.

## Claims

1. A module (1) for a turbomachine, the module comprising:
- a propeller comprising a plurality of blades,
- a rotating casing (7-8) rotatable about a longitudinal axis (X) and supporting the propeller provided with a plurality of blades (5),
- a system for changing the pitch of the blades (5) of the propeller comprising:
∘ a control means, and
∘ a mechanism for varying the pitch of the blades of the propeller,
wherein said system is supported by the rotating casing (7-8), wherein said control means comprise an annular row of rotating actuators (16) distributed about said longitudinal axis (X), and wherein said mechanism for varying the pitch of the blades comprises a synchronization ring (11) which is rotatably driven by rotating output shafts (17) of the actuators (16), , the synchronization ring (11) being rotatably guided with respect to said rotating casing (7-8) by guiding means and meshed by a first toothing (13) with pinions (14) of the blades (5),
**characterised in that** the output shafts (17) of the actuators (16) having axes of rotation (Z) substantially parallel to said longitudinal axis (X).

2. The module (1) according to claim 1, wherein the synchronization ring (11) is surrounded by a hub (8) belonging to the rotating casing and supporting the blades (5).

3. The module (1) according to claim 1 or 2, wherein the synchronization ring (11) comprises a radially external peripheral edge cooperating with at least one bearing (12) supported by said rotating casing (7-8) to form said rotatably guiding means.

4. The module (1) according to one of the preceding claims, wherein the actuators (16) are supported by a wall (7b) of said rotating casing, this wall (7b) being substantially perpendicular to said longitudinal axis (X).

5. The module (1) according to one of the preceding claims, wherein the first toothing (13) for meshing with said pinions (14) of the blades (5) is frustoconical.

6. The module (1) according to any of the preceding claims, wherein the pinions (14) of the blades (5) are conical pinions which are directly attached to roots of the blades (5).

7. The module (1) according to any of the preceding claims, wherein the synchronization ring (11) comprises a second toothing (15) which is cylindrical and meshes with said output rotating shafts (17).

8. The module (1) according to claim 7, wherein said second toothing (15) is located on a radially internal peripheral edge of the synchronization ring (11).

9. An aircraft turbomachine (21, 26) comprising at least one module (1) according to one of the preceding claims.
